# EUROPÄISCHE PATENTSCHRIFT

(11) **EP 0 667 014 B1**
(45) Veröffentlichungstag und Bekanntmachung des Hinweises auf die Patenterteilung: **07.01.1998**
(21) Anmeldenummer: 93923453.0
(22) Anmeldetag: 29.10.1993
(51) Int. Cl.: G06F 13/378

(54) **ANORDNUNG ZUR DATENÜBERTRAGUNG MIT EINEM PARALLELEN BUSSYSTEM**
CONFIGURATION FOR DATA TRANSFER WITH A PARALLEL BUS SYSTEM
CONFIGURATION POUR TRANSMETTRE DES DONNEES AVEC UN SYSTEME DE BUS PARALLELE

(30) Priorität: 04.11.1992 DE 4237259
(43) Veröffentlichungstag der Anmeldung: 16.08.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karslruhe (DE)
(86) Internationale Anmeldenummer: DE9301037
(87) Internationale Veröffentlichungsnummer: WO9410631

(56) Entgegenhaltungen:
- EP-A- 0 129 006
- EP-A- 0 135 881
- EP-A- 0 359 232

## Beschreibung

Die Erfindung betrifft eine Anordnung zur Datenübertragung mit einem parallelen Bussystem, bestehend aus Adreß-, Daten- und Steuerbus, und mit mehreren daran angeschlossenen Einheiten und eine Baugruppe und eine Adaptionseinrichtung für eine derartige Anordnung.

Eine derartige Anordnung wird in der deutschen Patentanmeldung DE-A-4 121 152 vorgeschlagen. Die Einheiten belegen dort Steckplätze in einem Baugruppenträger. Eine von ihnen greift während eines Zugriffszyklus als Verarbeitungseinheit lesend oder schreibend auf eine der andere Einheiten adreßgesteuert zu. Der Zugriffszyklus wird bei einem störungsfreien Zugriff mit einem Quittungssignal an die Verarbeitungseinheit beendet. In Automatisierungsgeräten werden die Einheiten z. B. als Zentralbaugruppe, Ein- und Ausgabebaugruppe, Kommunikationsprozessor oder Interface-Modul ausgebildet. Der Baugruppenträger eines Automatisierungsgerätes besitzt an seiner Rückwand eine oder mehrere Busleiterplatten zur elektrischen Verbindung der Einheiten in den Steckplätzen. Die Zentralbaugruppe, die ein Steuerprogramm zur Lösung einer Automatisierungsaufgabe bearbeitet, greift über diesen Rückwandbus lesend oder schreibend auf andere Baugruppen zu, die mit einem Quittungssignal Ready den Zugriff beenden, falls der Zugriff erfolgreich ausgeführt wurde. Die Zugriffszeit wird von einem sogenannten Timer der Zentralbaugruppe überwacht. Falls dieser abgelaufen ist, ohne daß die Zentralbaugruppe ein Quittungssignal erkannt hat, bricht diese den Zugriff erfolglos ab. Ein Automatisierungsgerät für komplexere Automatisierungsaufgaben besteht häufig aus einem Zentralgerät und mehreren mit diesem verbundenen Erweiterungsgeräten. Die Laufzeit des Timers zur Überwachung von Zugriffen auf nicht existierende oder defekte Einheiten muß auf die längste Zugriffsdauer des Automatisierungsgerätes, erhöht um einen Sicherheitszuschlag, eingestellt werden, um Fehlmeldungen sicher ausschließen zu können. Daher ist die Zeit zur Erkennung eines Zugriffsfehlers (QVZ = Quittungsverzug) durch Zeitmessung bei diesem Erkennungsverfahren immer größer als die maximale Zeit eines fehlerfreien Zugriffs. Zudem ist die Einstellung des Zeitgebers ein komplexes Problem, weil die Zugriffszeiten von vielen Parametern abhängen. Die QVZ-Zeit darf auch nicht zu groß eingestellt werden, da sie maßgebend die Busbelegungsdauer bestimmt und sich störend auf die Systemleistung auswirkt.

Das oben beschriebene Quittungsverfahren ist für eine Punkt-zu-Punkt-Verbindung, d. h. zur Datenübertragung von einer Einheit zu einer anderen, geeignet. Eine quittungsgesteuerte Übertragung zwischen einer Einheit und mehreren anderen adressierten Einheiten ist jedoch nicht möglich, da die Quittungsmeldung der am schnellsten reagierenden Einheit dominant ist und den Auftrittszeitpunkt späterer Quittungsmeldungen verdeckt. Die zuletzt erfolgte Quittung ist damit nicht erkennbar. Eine Übertragung zu mehreren Einheiten muß zeitgesteuert abgewickelt werden, wobei das Zeitraster in der Größenordnung der oben erwähnten QVZ-Zeit liegt. Die für einen Zugriff zu mehreren Einheiten benötigte Zeit ist daher länger als die maximal benötigte Zeit für einen Punkt-zu-Punkt-Zugriff.

Der Erfindung liegt die Aufgabe zugrunde, eine Anordnung zur Datenübertragung mit einem parallelen Bussystem zu schaffen, die einen zeitoptimierten Abbruch eines Zugriffes auf eine nichtquittierende Adresse sowie einen quittungsgesteuerten Zugriff auf gleichzeitig mehrere Einheiten ermöglicht.

Zur Lösung dieser Aufgabe weist eine neue Anordnung die Merkmale des Anspruchs 1 auf. Vorteilhafte Weiterbildungen der Anordnung sind in den Ansprüchen 2 bis 7 angegeben.

Die Erfindung betrifft ebenfalls eine Baugruppe und eine Adaptionseinrichtung für eine derartige Anordnung.

Anhand der Zeichnungen, in denen ein Ausführungsbeispiel der Erfindung dargestellt ist, werden im folgenden die Erfindung sowie Ausgestaltungen und Vorteile näher erläutert.
Figur 1 zeigt eine erfindungsgemäße Anordnung und
Figur 2 ein Zeitdiagramm der relevanten Steuersignale.

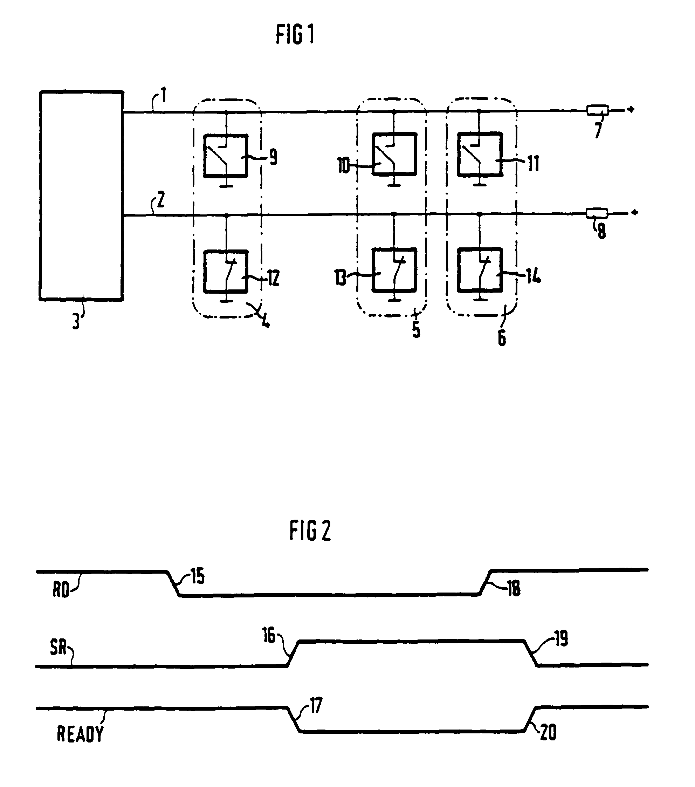

In Figur 1 werden eine erste Steuerleitung 1 und eine zweite 2, an welche vier Einheiten 3, 4, 5 und 6 angeschlossen sind, durch Pull-Up-Widerstände 7 und 8 auf High-Pegel gezogen. Die Einheit 3 als Verarbeitungseinheit wertet den Pegel auf der ersten Steuerleitung 1 als Quittungssignal Ready und den Pegel auf der zweiten Steuerleitung 2 als Meldesignal SR (System Ready) aus. Über Schalter 9, 10 und 11 kann das Quittungssignal Ready, über Schalter 12, 13 und 14 das Meldesignal SR in den Einheiten 4, 5 und 6 auf Low-Pegel gelegt werden. Im Ruhezustand sind die Schalter 9, 10 und 11 des Quittungssignals Ready alle geöffnet. Die erste Steuerleitung 1 liegt daher auf High-Pegel. Dagegen sind die Schalter 12, 13 und 14 des Meldesignals SR im Ruhezustand geschlossen, so daß auf die zweite Steuerleitung 2 Low-Pegel geschaltet ist. Wenn eine der Einheiten 4, 5 oder 6 den Schaltzustand ihres Schalters 9, 10 oder 11 ändert, wird der Pegel auf der ersten Steuerleitung 1 sofort auf Low gezogen. Low-Pegel kann daher auf der ersten Steuerleitung 1 als dominanter Zustand bezeichnet werden, da er den High-Pegel als rezessiven Zustand überlagert. Demgegenüber ändert sich auf der zweiten Steuerleitung 2 durch öffnen eines der Schalter 12, 13 oder 14 nichts; der dominante Low-Zustand bleibt durch die beiden übrigen, nicht betätigten Schalter erhalten.

Figur 2 zeigt ein Timing-Diagramm des Quittungssignals Ready, des Meldesignals SR und des Read-Signals RD für einen Lesezyklus bei einem Punkt-zu-Punkt-Zugriff. In der Ruhephase (kein Lesen oder Schreiben) halten alle Einheiten das Meldesignal SR auf Low-Pegel. Mit der fallenden Flanke 15 des Read-Signals RD schalten alle nichtadressierten Einheiten das Signal SR auf High-Pegel. Adressierte Baugruppen halten das Meldesignal SR auch nach der fallenden Flanke des Read-Signals RD so lange auf Low-Pegel, bis die Übernahme bzw. Übergabe der Daten erfolgt ist. Zum Zeitpunkt der steigenden Flanke 16 des Meldesignals SR ist die Datenübergabe abgeschlossen. Gleichzeitig wird das Quittungssignal Ready mit der fallenden Flanke 17 auf Low-Pegel geschaltet. Der Low-Pegel des Quittungssignals Ready ist für die Verarbeitungseinheit die Quittungsinformation, um einen Zugriff ordnungsgemäß zu beenden. Der Pegel des Meldesignals SR ist in diesem Fall irrelevant. Eine steigende Flanke 18 des Read-Signals RD versetzt nun alle Einheiten in den Ruhezustand, in Figur 2 ersichtlich an einer fallenden Flanke 19 des Meldesignals SR und einer steigenden Flanke 20 des Quittungssignals Ready. Das Timing-Diagramm eines schreibenden Punkt-zu-Punkt-Zugriffs entspricht dem in Figur 2 dargestellten; lediglich ist das Read-Signal RD durch ein Write-Signal WR zu ersetzen.

Falls sich auf der ersten und zweiten Steuerleitung gleichzeitig ein High-Pegel des Quittungs- und des Meldesignals einstellt, bedeutet dies, daß auf die ausgegebene Adresse keine Einheit antwortet. Ursache dafür kann eine Fehladressierung oder ein leerer Steckplatz sein. Dieser Zustand wird in der Anordnung vorteilhaft bereits 1,5 µs nach der fallenden Flanke des Read-Signals RD oder des Write-Signals WR erkannt.

Zum Anschluß von Einheiten, die über keine zweite Steuerleitung für das Meldesignal SR verfügen, kann eine Adaptionseinrichtung zwischen der Einheit und dem Bussystem eingefügt werden. Diese erzeugt das Meldesignal SR durch einen Timer, dessen Ablaufzeit die längste Dauer eines Zugriffszyklus übersteigen muß. Es wird abgebrochen, sobald die Adaptionseinrichtung einen Low-Pegel des Quittungssignals Ready erkennt. Falls eine solche Einheit aus der Adaptionseinrichtung gezogen wird und ein Zugriff stattfindet, kann ein Abbruch des Zugriffs erst nach Ablauf des Timers erfolgen. Durch die Adaptionseinrichtung ist die Kompatibilität der neuen Anordnung mit bisher verfügbaren Einheiten gewahrt.

Interface-Module, die zur Kopplung eines Zentralgerätes mit Erweiterungsgeräten dienen, halten das Meldesignal SR bei einem Zugriff auf Einheiten in einem Erweiterungsgerät so lange auf Low-Pegel, bis die entfernteste Einheit in ihren Koppelsträngen das Read- oder Write-Signal empfangen und ihr Meldesignal an das Zentralgerät zurückgegeben hat. Die dafür erforderliche Zeit entspricht der zweifachen maximalen Signallaufzeit im Strang. Diese Zeitinformation entnimmt das Interface-Modul ihrem individuellen Strang-Timing bzw. der Information über die Kabellänge der Einheiten.

Die Erzeugung des Meldesignals SR durch die Einheiten 4, 5 und 6 in Figur 1 erfolgt also nach folgendem Schema:
1. Erfolgt kein Zugriff über das Bussystem, so aktiviert jede Einheit 4, 5 und 6 durch Schließen der Schalter 12, 13 und 14 das Meldesignal SR und deaktiviert durch Öffnen der Schalter 9, 10 und 11 das Quittungssignal Ready.
2. Erfolgt ein Zugriff über das Bussystem, so deaktivieren diejenigen Einheiten, die den Zugriff erkannt haben und aufgrund der Adresse feststellen, daß sie davon nicht betroffen sind, durch Öffnen des Schalters 12, 13 oder 14 das Meldesignal SR.
3. Einheiten, welche den Zugriff erkannt haben und aufgrund der Adresse feststellen, daß sie davon betroffen sind, deaktivieren durch Öffnen ihres Schalters das Meldesignal SR genau dann, wenn sie die Reaktion auf diesen Zugriff abgeschlossen haben.

Bei einem inaktiven Meldesignal SR haben demnach alle Einheiten 4, 5 und 6 den Zugriff erkannt bzw. abgeschlossen. Dagegen gibt es bei einem aktiven Meldesignal SR mindestens eine Einheit 4, 5 oder 6, die ihre Reaktion auf den Zugriff noch nicht abgeschlossen hat.

Durch die kombinierte Auswertung des Quittungssignals Ready und des Meldesignals SR kann die Verarbeitungseinheit 3 beim Punkt-zu-Punkt-Zugriff folgende Schlußfolgerungen über den Zustand der Anordnung ziehen:
1. Ist Ready inaktiv und SR aktiv, so dauert der Zugriff noch an.
2. Ist Ready aktiv, so ist der Zugriff beendet und mindestens eine der Einheiten 4, 5 und 6 hat geantwortet. Dabei ist der Pegel des Meldesignals SR nicht relevant.
3. Sind die Signale Ready und SR inaktiv, so haben alle Einheiten 4, 5 und 6 den Zugriff zwar erkannt, aber nicht als relevant betrachtet. Dieser Fall entspricht einer Fehladressierung oder einem Zugriff auf eine nicht vorhandene Einheit.

Bei einem Zugriff auf gleichzeitig mehrere der Einheiten 4, 5 oder 6 muß lediglich das Meldesignal SR durch die Verarbeitungseinheit 3 ausgewertet werden. Ein Zugriff dauert noch an, solange das Meldesignal SR aktiv ist. Er ist beendet, sobald das Meldesignal SR inaktiv geschaltet wurde, da alle Slaves entweder am Zugriff desinteressiert waren oder ihre Reaktion darauf beendet haben.

In vorteilhafter Weise wird durch die erfindungsgemäße Anordnung sowohl beim Punkt-zu-Punkt-Zugriff als auch beim Mehrpunktzugriff eine optimale Reaktionszeit gewährleistet. Die Detektierung einer Fehladressierung oder eines Zugriffs auf eine nicht vorhandene Einheit erfolgt immer in der schnellstmöglichen Zeit, weil sich das Verfahren an die real im System existierenden Laufzeiten anpaßt.

Führt eine Verarbeitungseinheit einen Schreibzugriff auf mehrere Einheiten mit verschiedenen Laufzeiten durch und quittieren alle adressierten Einheiten mit dem Meldesignal SR die Übernahme der geschriebenen Information, dann hat die Verarbeitungseinheit bei der Überprüfung des Meldesignals SR auf High-Pegel die Gewißheit, daß die Information bei allen Senken sicher angekommen ist. Hier wird quasi ein synchroner Buszugriff realisiert, der immer in der schnellstmöglichen Zeit abgewickelt wird, weil sich das Verfahren an die real im System existierenden Laufzeiten adaptiert.

Der Zugriff erfolgt in der Anordnung synchron, wobei der Laufzeit-Jitter zwischen zwei beliebigen adressierten Einheiten immer kleiner oder gleich der maximalen Signallaufzeit innerhalb der Anordnung ist.

## Patentansprüche

1. Anordnung zur Datenübertragung mit einem parallelen Bussystem, bestehend aus Adreß-, Daten- und Steuerbus, und mit mehreren daran angeschlossenen Einheiten (3, 4, 5, 6), wobei eine erste Steuerleitung (1) zur Übertragung eines Quittungssignals, mit welchem in Zugriffszyklen eine oder mehrere durch eine erste Einheit (3) adressierte Einheiten Zugriffe quittieren, und eine zweite Steuerleitung (2) zur Übertragung eines Meldesignals (SR) vorhanden sind, mit welchem der ersten Einheit (3) von den übrigen (4, 5, 6) angezeigt wird, ob eine angeschlossene Einheit adressiert wird, indem das Meldesignal dominante und rezessive Zustände aufweist und außerhalb von Zugriffszyklen alle Einheiten, während der Zugriffszyklen aber nur adressierte Einheiten einen dominanten Zustand erzeugen.

2. Anordnung nach Anspruch 1, **dadurch gekennzeichnet,**
- daß das Quittungssignal (Ready) dominante und rezessive Zustände aufweist und
- daß adressierte Einheiten einen dominanten Zustand als Quittung während der Zugriffszyklen, die Einheiten in den übrigen Fällen aber einen rezessiven Zustand erzeugen.

3. Anordnung nach Anspruch 1 oder 2, **dadurch gekennzeichnet,**
- daß die Einheiten Baugruppen in einem Baugruppenträger sind.

4. Anordnung nach Anspruch 1 oder 2, **dadurch gekennzeichnet,**
- daß die Einheiten Baugruppen in mehreren Baugruppenträgern sind und
- daß die zweite Steuerleitung in alle Baugruppenträger geführt ist.

5. Anordnung nach Anspruch 3 oder 4, **dadurch gekennzeichnet,**
- daß Baugruppen, die kein Meldesignal erzeugen können, über eine Adaptionseinrichtung an das Bussystem angeschlossen sind, die ein Meldesignal erzeugt, das bei Auftreten einer Quittung den dominanten Zustand beibehält und andernfalls mindestens um die längste Dauer eines Zugriffszyklus verzögert den rezessiven Zustand einnimmt.

6. Anordnung nach einem der vorhergehenden Ansprüche, **dadurch gekennzeichnet,**
- daß die zweite Steuerleitung (2) mit einem Pull-Up-Widerstand (8) versehen ist und
- daß die Einheiten (3, 4, 5, 6) mit einem Open-Collector-Ausgang an der zweiten Steuerleitung (2) angeschlossen sind.

7. Anordnung nach einem der vorhergehenden Ansprüche, **dadurch gekennzeichnet,**
- daß die Anordnung Bestandteil eines Automatisierungsgeräts ist.

8. Baugruppe für eine Anordnung nach Anspruch 3, **dadurch gekennzeichnet,**
- daß Mittel vorhanden sind zur Erzeugung eines Quittungssignals, mit welchem die Baugruppe (4, 5, 6) in Zugriffszyklen, in denen sie durch eine erste Einheit (3) adressiert wird, Zugriffe quittiert, und
- daß Mittel vorhanden sind zur Erzeugung eines Meldesignals (SR), mit welchem der ersten Einheit (3) von der Baugruppe (4, 5, 6) angezeigt wird, ob die Baugruppe (4, 5, 6) adressiert wird, indem das Meldesignal dominante und rezessive Zustände aufweist und die Baugruppe (4, 5, 6) außerhalb von Zugriffszyklen, während der Zugriffszyklen aber nur, falls sie adressiert wird, einen dominanten Zustand erzeugt.

9. Adaptionseinrichtung für eine Anordnung nach Anspruch 5, **dadurch gekennzeichnet,**
- daß Baugruppen, die kein Meldesignal erzeugen können, über die Adaptionseinrichtung an das Bussystem anschließbar sind und
- daß die Adaptionseinrichtung Mittel zur Erzeugung eines Meldesignals aufweist, das bei Auftreten einer Quittung den dominanten Zustand beibehält und andernfalls mindestens um die längste Dauer eines Zugriffszyklus verzögert den rezessiven Zustand einnimmt.

## Claims

1. Arrangement for data transfer with a parallel bus system, comprising an address bus, a data bus and a control bus, and with several units (3, 4, 5, 6) connected thereto, a first control line (1) for transmitting an acknowledgement signal with which one or more units addressed by a first unit (3) acknowledge accesses during access cycles, and a second control line (2) for transmitting a status signal (SR), being available, with which status signal the remaining units (4, 5, 6) indicate to the first unit (3) whether a connected unit is being addressed, while the status signal has dominant and recessive states and all units generate a dominant state outside the access cycles, but only addressed units generate a dominant state during the access cycles.

2. Arrangement according to Claim 1, **characterised in that**
- the acknowledgement (Ready) signal has dominant and recessive states, and
- addressed units generate a dominant state as an acknowledgement during the access cycles, but the units generate a recessive state in other instances.

3. Arrangement according to Claim 1 or 2, **characterised in that**
- the units are modules in a subrack.

4. Arrangement according to Claim 1 or 2, **characterised in that**
- the units are modules in several subracks, and
- the second control line is run to all subracks.

5. Arrangement according to Claim 3 or 4, **characterised in that**
- modules that cannot generate a status signal are connected to the bus system via an adaptation device which generates a status signal that maintains the dominant state when an acknowledgement appears and otherwise assumes the recessive state, with a delay at least equal to the longest duration of an access cycle.

6. Arrangement according to one of the preceding Claims, **characterised in that**
- the second control line (2) is provided with a pull-up resistor (8) and
- the units (3, 4, 5, 6) are connected to the second control line (2) via an open collector output.

7. Arrangement according to one of the preceding Claims, **characterised in that**
- the arrangement is part of an automation device.

8. Module for an arrangement according to Claim 3, **characterised in that**
- means are available for generating an acknowledgement signal, with which the module (4, 5, 6) acknowledges accesses in access cycles in which the module is being addressed by a first unit (3), and
- means are available for generating a status signal (SR), with which the module (4, 5, 6) indicates to the first unit (3) whether the module (4, 5, 6) is being addressed, while the status signal has dominant and recessive states and the module (4, 5, 6) generates a dominant state outside access cycles, but only generates a dominant state during the access cycles when it is being addressed.

9. Adaptation device for an arrangement according to Claim 5, **characterised in that**
- the modules that cannot generate a status signal can be connected to the bus system via the adaptation device, and
- the adaptation device has means for generating a status signal that maintains the dominant state when an acknowledgment appears and otherwise assumes the recessive state, with a delay at least equal to the longest duration of an access cycle.

## Revendications

1. Configuration pour transmettre des données comprenant un système de bus parallèle, constitué de bus d'adresses, de données et de commande, et plusieurs unités (3, 4, 5, 6) raccordées à ce système de bus, selon laquelle il existe une première ligne de commande (1) pour la transmission d'un signal d'accusé de réception, par lequel, dans des cycles d'accès, une ou plusieurs unités adressées par une première unité (3) accusent réception, et une deuxième ligne de commande (2) pour la transmission d'un signal d'avis (SR), par lequel la première unité (3) est informée par les autres (4, 5, 6) du fait qu'une unité raccordée est adressée, le signal d'avis présentant des états dominants et récessifs et, en dehors des cycles d'accès, toutes les unités produisant un état dominant mais, pendant les cycles d'accès, seules des unités adressées produisent un état dominant.

2. Configuration selon la revendication 1, caractérisée par le fait que
- le signal d'accusé de réception (Ready) présente des états dominants et récessifs, et que
- des unités adressées produisent un état dominant comme accusé de réception pendant les cycles d'accès mais les unités dans les autres cas produisent un état récessif.

3. Configuration selon les revendications 1 ou 2, caractérisée par le fait que
- les unités sont des cartes dans un fond de panier.

4. Configuration selon les revendications 1 ou 2, caractérisée par le fait que
- les unités sont des composants dans plusieurs fonds de paniers, et que
- la deuxième ligne de commande passe dans tous les fonds de paniers.

5. Configuration selon les revendications 3 ou 4, caractérisée par le fait que
- les cartes qui ne peuvent pas produire de signal d'avis sont raccordées au système de bus par l'intermédiaire d'un dispositif d'adaptation qui produit un signal d'avis qui conserve l'état dominant lors de l'apparition d'un accusé de réception, et qui prend sinon l'état récessif après avoir été retardé au moins de la plus longue durée d'un cycle d'accès.

6. Configuration selon l'une des revendications précédentes, caractérisée par le fait que
- la deuxième ligne de commande (2) est munie d'une résistance (8) reliant aux tensions hautes, et que
- les unités (3, 4, 5, 6) sont raccordées par une sortie à collecteur ouvert à la deuxième ligne de commande (2).

7. Configuration selon l'une des revendications précédentes, caractérisée par le fait que
- la configuration fait partie d'un appareil d'automatisation.

8. Composant pour une configuration selon la revendication 3, caractérisé par le fait que
- des moyens sont présents pour produire un signal d'accusé de réception par lequel le composant (4, 5, 6) accuse réception des accès dans des cycles d'accès dans lesquels elle est adressée par une première unité (3), et que
- des moyens sont présents pour produire un signal d'avis (SR) par lequel la première unité (3) est informée par le composant (4, 5, 6) du fait que le composant (4, 5, 6) est adressé, le signal d'avis présentant des états dominants et récessifs et, en dehors des cycles d'accès, le composant (4, 5, 6) produisant toujours un état dominant, mais, pendant les cycles d'accès, produisant un état dominant seulement si il est adressé.

9. Dispositif d'adaptation pour une configuration selon la revendication 5, caractérisé par le fait que
- des composants qui ne peuvent pas produire de signal d'avis peuvent être raccordés au système de bus par l'intermédiaire du dispositif d'adaptation, et que
- le dispositif d'adaptation comporte des moyens pour produire un signal d'avis qui conserve l'état dominant lors de l'apparition d'un accusé de réception, et qui prend sinon l'état récessif après avoir été retardé au moins de la plus longue durée d'un cycle d'accès.
